# EUROPÄISCHE PATENTSCHRIFT

(11) **EP 3 111 746 B1**
(45) Veröffentlichungstag und Bekanntmachung des Hinweises auf die Patenterteilung: **26.06.2019**
(21) Anmeldenummer: 16163788.9
(22) Anmeldetag: 05.04.2016
(51) Int. Cl.: A01F 15/07, A01F 15/18, B65G 15/32, B65G 15/34, B65G 15/36

(54) **IN LÄNGSRICHTUNG ENDLOS GESCHLOSSENES BAND, INSBESONDERE RUNDBALLENPRESSBAND**
LONGITUDINAL ENDLESS CLOSED BELT, IN PARTICULAR BELT FOR ROTOBALER
BANDE FERMÉE SANS FIN DANS LA DIRECTION LONGITUDINALE, EN PARTICULIER BANDE DE PRESSE À BALLES RONDES

(30) Priorität: 03.07.2015 DE 102015212481
(43) Veröffentlichungstag der Anmeldung: 04.01.2017
(73) Patentinhaber: ContiTech Transportbandsysteme GmbH, 30165 Hannover (DE)
(72) Erfinder: Behrens, Carsten, 37434 Bilshausen (DE); Stange, Lysander, 37154 Northeim (DE)
(74) Vertreter: Finger, Karsten

(56) Entgegenhaltungen:
- DE-A1- 2 832 054
- DE-B- 1 176 564
- US-A- 2 667 789
- US-A- 5 326 411
- US-A- 5 422 165
- US-A1- 2010 300 849

## Beschreibung

Die Erfindung betrifft ein in Längsrichtung endlos geschlossenes Band, insbesondere ein Rundballenpressband, gemäß dem Oberbegriff des Anspruchs 1 sowie ein Verfahren zur Herstellung eines derartigen endlos geschlossenen Bands gemäß Anspruch 11.

In vielen technischen Anwendungen werden seit langem endlos geschlossene Bänder eingesetzt. Dies können z.B. Antriebsriemen, Förderbänder oder Rundballenpressbänder sein. Diese werden üblicherweise dadurch hergestellt, dass eine Gewebekarkasse als Kernbereich aus einer Gewebelage oder mehreren Gewebelagen konfektioniert wird.

Dieser Kernbereich wird von innen mit einer elastomeren Laufseite und von außen mit einer elastomeren Tragseite (z.B. Deckplattengummi) versehen. Diese Anordnung kann im Falle der Vulkanisation von Gummiprodukten in einer Presse frei abgeheizt werden. Das (vulkanisierte) Band kann dann auf die gewünschte Breite zugeschnitten werden.

Nachteilig ist hierbei, dass durch das seitliche Zuschneiden das Gewebe des Kernbereichs zumindest teilweise freigelegt und durch das Schneiden beschädigt werden kann. Das freiliegende Gewebe kann daher Feuchtigkeit aufnehmen, wodurch es zu einer ungewollten Aufquellung der Gewebekanten kommen kann, die zu einer Verformung des Bandes führen kann. Dies kann zu einem verschlechterten Laufverhalten in Längsrichtung führen. Ferner können an den Schnittkanten Gewebefäden der Gewebekarkasse seitlich austreten. Diese Fransenbildung kann zum einen einen optischen Mangel darstellen. Zum anderen können sich in diese Fransen an anderen Körpern verwickeln, hierdurch aus der Kante der Gewebekarkasse herausgerissen werden und so zu Beschädigungen der Deckplatten führen.

Aus der DE 30 16 674 A1 ist ein Pressband für Ballenriemen bekannt, welches als Kern ein in Längsrichtung verlaufendes Verstärkungsgewebe aufweist. Oberhalb und unterhalb des Verstärkungsgewebes sind Deckplatten angeordnet. An den glattgeschnittenen Seitenkanten des Pressbandes sind beidseitig Kantenstreifen angebracht, um die Seitenkanten abzudecken und gegen Beschädigungen zu schützen. Die Kantenstreifen sind üblicherweise aus dem gleichen Material wie das übrige Pressband hergestellt. Dies ist meist ein elastomeres Material.

Nachteilig ist hierbei, dass die Kantenstreifen zum Schutz des Kernbereichs verschleißen bzw. beschädigt werden kann, wodurch die Kantenstreifen diese Aufgabe nur noch eingeschränkt oder sogar gar nicht mehr wahrnehmen könnten.

Die US 5,326,411 A beschreibt ein in Längsrichtung endlos geschlossenes Rundballenpressband mit einem Bandkern. Der Bandkern wird entweder in der Querrichtung sowie in der Höhe durchgängig von einem Material umgeben oder der Bandkern wird im Wesentlichen in der Querrichtung oben und unten von einem ersten Material und an den beiden Seiten in Querrichtung von einem zweiten Material als Kappen umgeben. Die Kappen bestehen aus einem härteren Elastomer als die obere und untere Schicht sowie als der Bandkern. In jedem Fall weist das Rundballenpressband der US 5,326,411 A zwei Kantenhüllen oder Kantenüberwürfe auf, welche aus einem flachen gewebten Material bestehen. An jeder seitlichen Kante des Bandkerns in Querrichtung ist eine Kantenhülle angeordnet, um die seitliche Kante des Bandkerns zu schützen. Die Kantenhülle liegt hierzu jeweils von unten, von der Seite und von oben an dem Bandkern an, so dass die Kantenhülle die jeweilige seitliche Kante des Bandkerns U-förmig umschließt. Hierzu werden die Kantenhüllen mit einem Klebemittel auf den Bandkern aufgebracht und unter Druck verfestigt. Die elastomeren Kappen werden dann von außen über die Kantenhüllen angeordnet

Das Dokument US 2,667,789 offenbart ein Förderband mit verstärktem Kantenschutz und einem mehrlagigen Bandkern.

Das Dokument US 2010/0300849 A1 offenbart ein Förderband mit verstärkten Kantenschutz und einem einlagigen Kernbereich, des Weiteren offenbart das Dokument ein Verfahren zur Herstellung eines solchen Förderbands.

Eine Aufgabe der vorliegenden Erfindung ist es, ein in Längsrichtung endlos geschlossenes Band, insbesondere ein Rundballenpressband, der eingangs beschriebenen Art bereit zu stellen, bei dem der Kernbereich seitlich besser als bisher bekannt geschützt werden kann.

Die Aufgabe wird erfindungsgemäß durch ein in Längsrichtung endlos geschlossenes Band, insbesondere ein Rundballenpressband, mit den Merkmalen gemäß Anspruch 1 sowie ein Verfahren zu dessen Herstellung gemäß Anspruch 11 gelöst. Vorteilhafte Weiterbildungen sind in den Unteransprüchen beschrieben.

Somit betrifft die vorliegende Erfindung ein in Längsrichtung endlos geschlossenes Band, insbesondere ein Rundballenpressband, mit einem Kernbereich und wenigstens einem quer zur Längsrichtung, d.h. in Querrichtung, angeordneten Randbereich. Dieser Randbereich ist in der Breite seitlich zum Kernbereich angeordnet. Der Kernbereich kann u.a. der Übertragung von Zugkräften in Längsrichtung dienen und kann hierzu Zugträger aufweisen.

Die vorliegende Erfindung ist dadurch gekennzeichnet, dass der Randbereich zumindest abschnittsweise ein Schutzelement aufweist. Dieses Schutzelement kann den Randbereich seitlich schützen, z.B. vor Verschleiß und bzw. oder Beschädigungen. Das Schutzelement kann abschnittsweise oder durchgängig vorgesehen sein. Das Schutzelement kann aus einem Material bestehen, welches widerstandsfähiger als das übrige Material des Randbereichs ist. Beispielsweise kann das Schutzelement Metall aufweisen oder aus Metall bestehen. Das Schutzelement ist in das Material des Randbereichs eingearbeitet, wie z.B. in ein elastomeres Material. Dabei ist diese Erfindung auf alle Arten von endlos geschlossenen Bändern, Riemen, Gurten wie z.B. Antriebsriemen, Fördergurte, Raunballenpressbänder etc. anwendbar.

Gemäß einem Aspekt der vorliegenden Erfindung ist das Schutzelement in Längsrichtung über den gesamten endlos geschlossenen Umfang angeordnet. Hierdurch kann ein durchgängiger, d.h. ununterbrochener, Schutz erreicht werden. Um dies zu erreichen, kann das Schutzelement selbst endlos geschlossen sein. Vorteilhaft ist hierbei, durch den endlosen Schluss des Schutzelement sichergestellt werden kann, dass die Schutzwirkung des Schutzelements ununterbrochen gegeben sein kann. Das Schutzelement kann jedoch auch unterbrochen und sich an den Enden überlappend angeordnet sein. Vorteilhaft ist hierbei, dass die Herstellung des Schutzelements auf diese Weise vereinfacht werden kann. Auch kann das Schutzelement aus einer Mehrzahl, insbesondere aus eine Vielzahl, einzelner Elemente bestehen, welche einander überlappend angeordnet sind. Eine derartige Anordnung kann als schuppenförmig bezeichnet werden. Diese Mehrzahl bzw. Vielzahl von einzelnen Elementen kann die Herstellung weiter vereinfachen bzw. flexibler gestalten.

Gemäß einem weiteren Aspekt der vorliegenden Erfindung weist das Schutzelement in Längsrichtung eine höhere Dehnung als der Kernbereich auf. Hierdurch kann erreicht werden, dass der Kernbereich weiterhin seiner Aufgabe der Übertragung der Zugkraft in Längsrichtung vollständig nachkommen kann, weil aufgrund der höheren Dehnbarkeit des Schutzelements dieses gegenüber dem Kernbereich als Zugträger in Längsrichtung lediglich vernachlässigbar geringe Zugkräfte übertragen können muss. Somit kann das Laufverhalten des endlos geschlossenen Bands trotz des Schutzelements unbeeinflusst bleiben.

Gemäß einem weiteren Aspekt der vorliegenden Erfindung weist das Schutzelement ein metallisches Element, insbesondere eine Stahllitze, auf, vorzugweise ist das Schutzelement ein metallisches Element, insbesondere eine Stahllitze. Vorteilhaft ist hierbei, dass Metall ein sehr widerstandsfähiges Material ist, welches die erforderliche Widerstandsfähigkeit aufweisen kann. Die Verwendung einer Stahllitze als Schutzelement ist besonders vorteilhaft, weil eine Stahllitze die Anforderung einer geringen Dehnung bei gleichzeitig hoher Widerstandsfähigkeit erfüllen kann. Unter einer Stahllitze ist dabei ein zweidimensionales Geflecht aus Stahlfäden in Form einer Strickware zu verstehen. Die Zwischenräume der Stahlfäden können durch das Material des Randbereichs, welches vorzugsweise ein elastomeren Material ist, sehr gut durchdrungen werden, so dass die Stahllitze sehr gut in das Material des Randbereichs eingebettet werden kann.

Gemäß einem weiteren Aspekt der vorliegenden Erfindung ist das Schutzelement in Längsrichtung unterbrochen ausgebildet. Hierdurch kann das Schutzelement segmentiert ausgebildet werden. Auch hierdurch kann erreicht werden, dass über das Schutzelement keine Zugkräfte in Längsrichtung übertragen werden können, weil diese Aufgabe weiterhin durch den Kernbereich übernommen werden soll.

Gemäß einem weiteren Aspekt der vorliegenden Erfindung ist eine Mehrzahl von Schutzelementen in Längsrichtung einander abschnittsweise überlappend angeordnet. Die Überlappung kann schuppenartig erfolgen. Hierdurch kann der Schutz an den überlappten Stellen erhöht werden.

Gemäß einem weiteren Aspekt der vorliegenden Erfindung weist das endlos geschlossene Band ferner einen innenliegenden Bereich und einen außenliegenden Bereich auf, wobei der Kernbereich zwischen dem innenliegenden Bereich und dem außenliegenden Bereich angeordnet ist, wobei vorzugsweise ferner der Randbereich wenigstens abschnittsweise, vorzugsweise vollständig, zwischen dem innenliegenden Bereich und dem außenliegenden Bereich angeordnet ist. Hierbei ist "innen" und "außen" in Richtung der Dicke bzw. Höhe des endlos geschlossenen Bandes zu verstehen, d.h. sozusagen in radialer Richtung. Der innenliegende Bereich stellt bei z.B. einem Rundballenpressband die Laufseite und der außenliegende Bereich die Tragseite dar.

Auf diese Weise kann der Kernbereich beidseitig durch die innenliegenden und außenliegenden Bereiche geschützt werden. Dies ist der Fall, falls die innenliegenden und außenliegenden Bereiche sich jeweils in Querrichtung lediglich über die Breite des Kernbereichs erstrecken und der Randbereich so dick ausgebildet ist, dass er seitlich an den innenliegenden Bereich, den außenliegenden Bereich und den Kernbereich anschließt. Alternativ können der außenliegende Bereich und der innenliegende Bereich auch über einen Teil der Breite bzw. die gesamte Breite des endlos geschlossenen Bandes in Querrichtung ausgebildet sein, so dass sie zwischen sich sowohl den Randbereich als auch den Kernbereich teilweise oder vollständig einschließen. Hierdurch kann eine bessere Verbindung zum einen über eine größere Kontaktfläche erzeugt werden. Zum anderen kann diese Kontaktfläche den Randbereich von drei Seiten umschließen, was ebenfalls die Stabilität dieser Verbindung erhöhen kann. Durch diese verbesserte Verbindung zwischen Randbereich und übrigem Band kann der Randbereich seine schützende Wirkung besser und länger ausüben.

Wird der Randbereich vollständig zwischen dem innenliegenden Bereich und dem außenliegenden Bereich angeordnet, so erstrecken sich der innenliegende Bereich und der außenliegende Bereich sowie der Randbereich in Querrichtung auf gleicher Breite und schließen somit seitlich miteinander bündig ab. Hierdurch wird nach oben und nach unten jeweils eine glatte und geschlossene Oberfläche erzeugt, die nicht nur einheitlich aussieht, sondern auch ein einheitliches Verhalten aufweisen kann, beispielsweise hinsichtlich der Laufeigenschaften. Auch wird hierdurch die Verbindung zwischen Randbereich und Kernbereich durch die darunter bzw. darüber angeordneten innen- bzw. außenliegenden Bereiche geschützt. Ferner kann die Wirkung zwischen den innenliegenden und außenliegenden Bereichen und dem Randbereich auf diese Art und Weise maximiert werden, indem die Kontaktfläche zwischen diesen Bereichen maximiert wird.

Gemäß einem weiteren Aspekt der vorliegenden Erfindung weist das endlos geschlossene Band zwei einander quer zur Längsrichtung gegenüberliegende Randbereiche auf. Auf diese Weise können die zuvor beschriebenen Vorteile der vorliegenden Erfindung an beiden seitlichen Kanten des endlos geschlossenen Bandes genutzt werden. Hierdurch kann das endlos geschlossene Band auch symmetrisch aufgebaut werden.

Gemäß einem weiteren Aspekt der vorliegenden Erfindung ist der Kernbereich endlos gewickelt. Hierdurch kann ein endlos geschlossenes Band ohne Unterbrechung in Längsrichtung hergestellt werden, so dass eine Verbindungsstelle als Schwachstelle vermieden werden kann. Auch kann eine gleichmäßige Übertragung von Zugkräften in Längsrichtung ermöglicht werden.

Gemäß einem weiteren Aspekt der vorliegenden Erfindung weist der Kernbereich ein Verstärkungsgewebe auf. Dies kann die Übertragung von Zugkräften in Längsrichtung ermöglichen bzw. verbessern. Das Verstärkungsgewebe kann einlagig oder mehrlagig ausgebildet sein.

Gemäß einem weiteren Aspekt der vorliegenden Erfindung weisen ein innenliegender Bereich und bzw. oder ein außenliegender Bereich und bzw. oder der Randbereich und bzw. oder beide Randbereiche ein elastomeres Material auf, vorzugsweise bestehen aus einem elastomeren Material. Auf diese Weise können die elastischen Eigenschaften des Elastomermaterials bei dem endlos geschlossenen Band genutzt werden.

Die vorliegende Erfindung betrifft auch ein Verfahren zur Herstellung eines in Längsrichtung endlos geschlossenen Bands wie zuvor beschrieben mit den Schritten:
- Herstellen eines endlos geschlossenen Kernbereichs durch Wickeln und
- Anordnen wenigstens eines Randbereichs seitlich quer zur Längsrichtung neben dem Kernbereich,
- wobei der Randbereich zumindest abschnittsweise ein Schutzelement aufweist.

Mittels dieses Verfahrens kann ein erfindungsgemäßes endlos geschlossenes Band einfach und effizient hergestellt werden.

Gemäß einem weiteren Aspekt der vorliegenden Erfindung weist das Verfahren ferner den zusätzlichen Schritt auf:
- Anordnen eines innenliegenden Bereichs von innen an den Kernbereich, wobei der innenliegende Bereich vorzugsweise quer zur Längsrichtung über den Kernbereich hinausragt, und
- Anordnen eines außenliegenden Bereichs von außen auf den Kernbereich, wobei der außenliegende Bereich vorzugsweise quer zur Längsrichtung über den Kernbereich hinausragt, so dass der Randbereich zumindest teilweise, vorzugsweise vollständig, zwischen dem innenliegenden Bereich und dem außenliegenden Bereich angeordnet ist.

Der innenliegende Bereich und der außenliegende Bereich weisen die zuvor bereits beschriebenen Vorteile auf. Diese Art der Herstellung ermöglicht beim Aufbau des Bandes von innen nach außen eine gute Zugänglichkeit der Zwischenprodukte für die einzelnen Verfahrensschritte.

Gemäß einem weiteren Aspekt der vorliegenden Erfindung weist das Verfahren ferner den zusätzlichen Schritt auf:
- Vulkanisieren des Bandes.

Hierdurch kann die zuvor beschriebene Anordnung der einzelnen Elemente des erfindungsgemäßen endlos geschlossenen Bandes gemeinsam vulkanisiert werden, so dass zwischen allen Elementen eine stoffschlüssige Verbindung hergestellt werden kann.

Gemäß einem weiteren Aspekt der vorliegenden Erfindung weist das Verfahren ferner den zusätzlichen Schritt auf:
- Trennen des Randbereichs und bzw. oder eines innenliegenden Bereichs und bzw. oder eines außenliegenden Bereichs in Richtung der Dicke des Bandes, so dass quer zur Längsrichtung der Randbereich mit dem innenliegenden Bereich und bzw. oder mit dem außenliegenden Bereich bündig abschließt und das Schutzelement einschließt.

Auf diese Weise kann das vulkanisierte endlos geschlossene Band auf eine derartige Breite zugeschnitten werden, dass die innenliegenden und außenliegenden Bereiche den Kernbereich und den Randbereich beidseitig sicher umschließen und das Schutzelement im Randbereich eingeschlossen ist. Ferner kann das endlos geschlossene Band hierdurch auf die gewünschte Breite zugeschnitten werden. Hierdurch kann auch eine glatte und gerade seitliche Kante des endlos geschlossenen Bandes erzeugt werden. Dies kann für den Geradelauf des endlos geschlossenen Bandes vorteilhaft sein.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen endlos geschlossenen Bandes in einem ersten Herstellungsschritt;
- Fig. 2: eine perspektivische schematische Darstellung eines erfindungsgemäßen endlos geschlossenen Bandes in einem zweiten Herstellungsschritt;
- Fig. 3: eine perspektivische schematische Darstellung eines erfindungsgemäßen endlos geschlossenen Bandes in einem dritten Herstellungsschritt;
- Fig. 4: eine perspektivische schematische Darstellung eines erfindungsgemäßen endlos geschlossenen Bandes in einem vierten Herstellungsschritt;
- Fig. 5: eine perspektivische schematische Darstellung eines erfindungsgemäßen endlos geschlossenen Bandes in einem fünften Herstellungsschritt; und
- Fig. 6: eine perspektivische schematische Darstellung eines erfindungsgemäßen endlos geschlossenen Bandes in einem sechsten Herstellungsschritt.

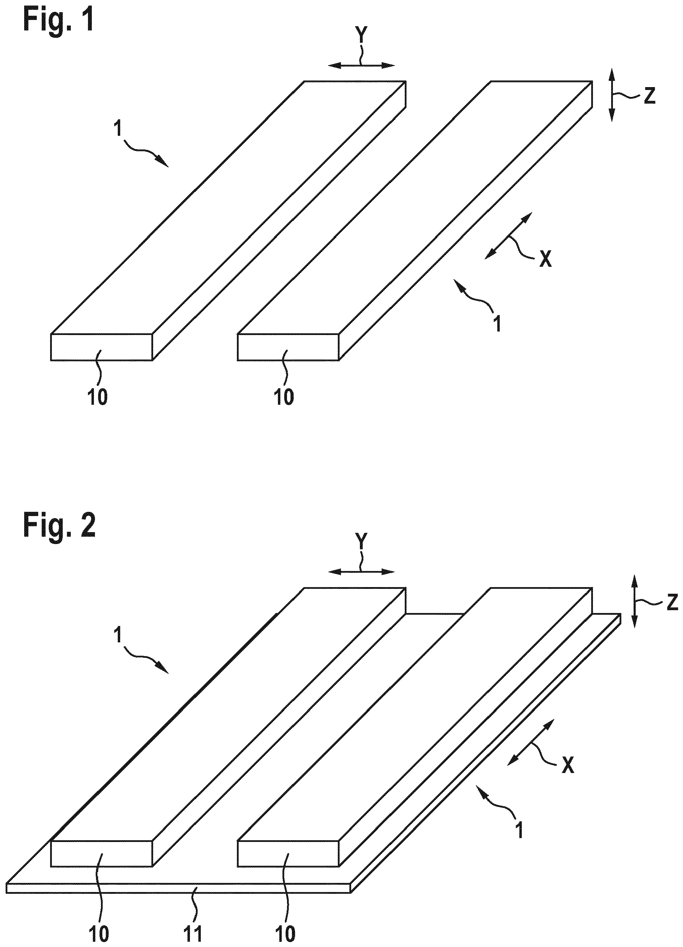

Die Fig. 1 bis 6 zeigen perspektivische schematische Darstellungen eines erfindungsgemäßen endlos geschlossenen Bandes 1 in einem ersten bis sechsten Herstellungs schritt.

Das endlos geschlossene Band 1 ist ein Rundballenpressband 1, welches sich im Wesentlichen in Längsrichtung X erstreckt und in Längsrichtung X endlos geschlossen ist (nicht dargestellt). In seitlicher Richtung Y bzw. Querrichtung Y weist das Rundballenpressband 1 eine gewisse Breite auf. In der Höhe Z bzw. Dicke Z ist das Rundballenpressband 1 vergleichsweise flach ausgebildet. Die Längsrichtung X, die Querrichtung Y und die Höhe Z sind jeweils senkrecht zueinander angeordnet.

Das Rundballenpressband 1 weist einen Kernbereich 10 in Form eines Verstärkungsgewebes 10 auf. Das Verstärkungsgewebe 10 ist endlos geschlossen gewickelt auf einer Konfektionstrommel angeordnet. Gleichzeitig wird das Verstärkungsgewebe 10 bereits auf seine endgültige Breite geschnitten. Dies kann sowohl durch einen reinen Breitenbeschnitt eines Monopressriemens erfolgen als auch durch mehrfachen Breitenschnitt der Karkasse erst auf der Konfektionsanlage vor der Vulkanisation (Konfektionsbeschnitt). Um auf einer Konfektionsanlage mehrere, hier zwei, Rundballenpressbänder 1 gleichzeitig herstellen zu können, können mehrere endlos geschlossene Verstärkungsgewebe 10 in Querrichtung Y nebeneinander angeordnet werden (vgl. Fig. 1).

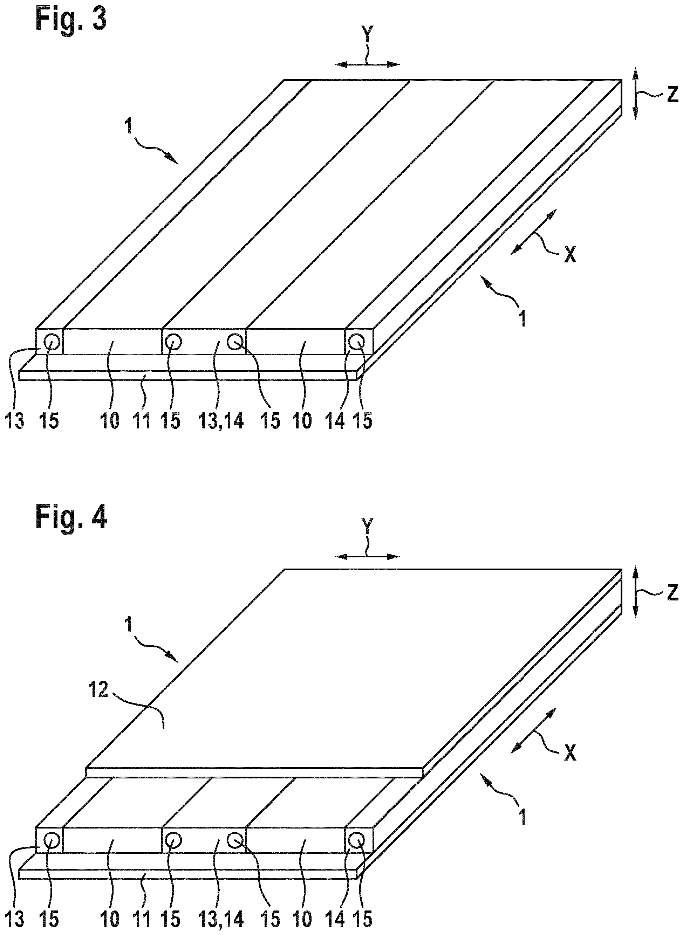

Diese Verstärkungsgewebe 10 werden in einem zweiten Verfahrensschritt von unten, d.h. von innen, mit einem innenliegenden bzw. laufseitigen Bereich aus elastomerem Material unterfüttert (vgl. Fig. 2). In einem dritten Verfahrensschritt wird dann weiteres elastomeres Material vorzugsweise in Form von Materialstreifen in Querrichtung Y seitlich der beiden Verstärkungsgewebe 10 auf die obere, außenliegende Seite des laufseitigen Bereichs 11 in Höhe der Verstärkungsgewebe 10 aufgetragen (vgl. Fig. 3). Dieses elastomere Material bildet seitlich der Verstärkungsgewebe 10 erste und zweite Randbereiche 13, 14 aus.

In dem elastomeren Material der beiden Randbereiche 13, 14 ist jeweils ein Schutzelement 15 in Form einer über den gesamten endlos geschlossenen Umfang des Rundballenpressbands 1 angeordneten Stahllitze 15 enthalten, welche aufgrund ihrer hohen Dehnbarkeit lediglich gegenüber dem Kernbereich 10 als Zugträger vernachlässigbar geringe Zugkräfte in Längsrichtung X übertragen kann. Die Stahllitzen 15 sind jeweils von dem elastomeren Material der Randbereiche 13, 14 durchdrungen und hierdurch fest in die Randbereiche 13, 14 eingebettet. Die Stahllitzen 15 schützen den Kernbereich 10 seitlich in Querrichtung Y vor Beschädigungen und Verschleiß.

In einem vierten Verfahrensschritt wird dann ein außenliegender bzw. tragseitiger Bereich 12 von oben auf die Verstärkungsgewebe 10 bzw. Randbereiche 13, 14 aufgebracht, so dass diese über die gesamte Breite in Querrichtung Y umfasst werden (vgl. Fig. 4). Diese Anordnung wird dann vulkanisiert.

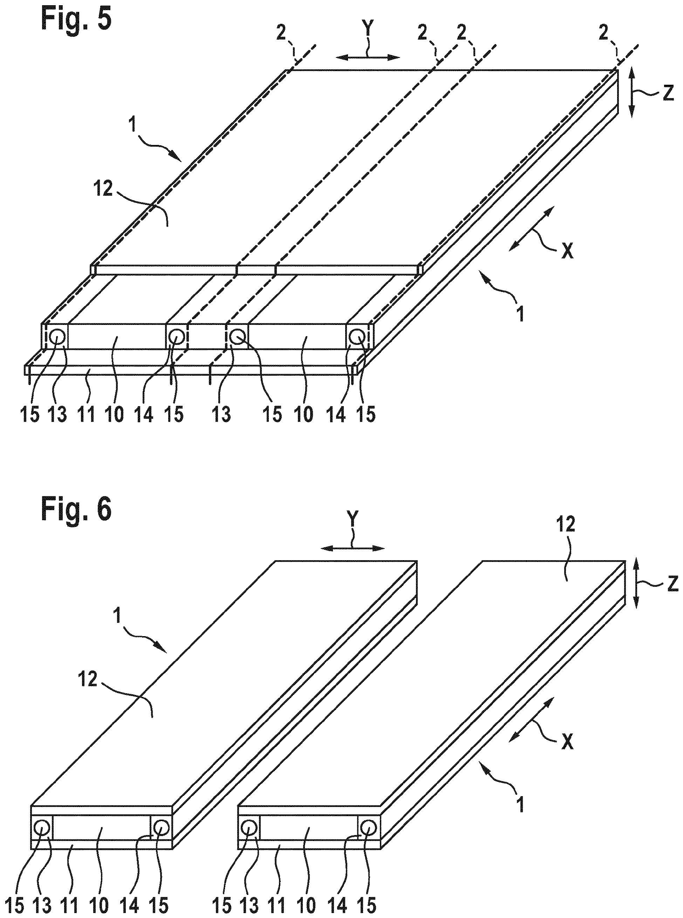

In einem fünften Verfahrensschritt können die beiden Verstärkungsgewebe 10 voneinander getrennt werden, indem in Längsrichtung X entlang der Schnittlinien 2 geschnitten wird (vgl. Fig. 5). Hierdurch werden seitlich in Querrichtung Y gerade Außenkanten der Rundballenpressbänder 1 geschaffen (vgl. Fig. 6). Um beim Schneiden die beiden Verstärkungsgewebe 10 nicht zu beschädigen, können diese mittels z.B. Ultraschall oder Röntgen zerstörungsfrei detektiert und die Schnittlinien 2 auf der äußeren Oberseite des tragseitigen Bereichs 12 angezeichnet werden.

Auf diese Weise können erfindungsgemäß die Laufeigenschaften eines endlos gewickelten Bandes 1 als Rundballenpressband 1 genutzt werden und zugleich können dessen seitliche Kanten durch die beiden elastomeren Randbereiche 13, 14 und insbesondere die dort eingebetteten Stahllitzen 15 geschützt werden. Auch kann vermieden werden, dass das Verstärkungsgewebe 10 durch das Zuschneiden beschädigt werden sowie seitlich in Querrichtung Y aus dem Rundballenpressband 1 herausragen kann. Dies kann auch das optische Erscheinungsbild des Rundballenpressbandes 1 verbessern. Die beiden elastomeren Randbereiche 13, 14 können auch als Verschleißschutz der seitlichen Kanten des Rundballenpressbandes 1 wirken.

### Bezugszeichenliste

### (Teil der Beschreibung)

- X: Längsrichtung
- Y: Querrichtung bzw. seitliche Richtung
- Z: Dicke bzw. Höhe

- 1: endlos geschlossenes Band bzw. Rundballenpressband
- 10: Kernbereich bzw. Verstärkungsgewebe
- 11: innenliegender bzw. laufseitiger Bereich
- 12: außenliegender bzw. tragseitiger Bereich
- 13: erster Randbereich
- 14: zweiter Randbereich
- 15: Schutzelement, Abriebschutz bzw. Stahllitze

- 2: Schnittlinie

## Patentansprüche

1. In Längsrichtung (X) endlos geschlossenes Band (1), insbesondere Rundballenpressband (1), mit einem Kernbereich (10), und wenigstens einem quer zur Längsrichtung (X) angeordneten Randbereich (13; 14), wobei der Randbereich (13; 14) zumindest abschnittsweise ein Schutzelement (15) aufweist, welches in das Material des Randbereichs (13; 14) eingearbeitet ist, **dadurch gekennzeichnet, dass** der Kernbereich (10) endlos gewickelt ist.

2. In Längsrichtung (X) endlos geschlossenes Band (1) gemäß Anspruch 1,
wobei das Schutzelement (15) in Längsrichtung (X) über den gesamten endlos geschlossenen Umfang angeordnet ist.

3. In Längsrichtung (X) endlos geschlossenes Band (1) gemäß Anspruch 1 oder 2,
wobei das Schutzelement (15) in Längsrichtung (X) eine höhere Dehnbarkeit als der Kernbereich (10) aufweist.

4. In Längsrichtung (X) endlos geschlossenes Band (1) gemäß einem der vorherigen Ansprüche,
wobei das Schutzelement (15) ein metallisches Element (15), insbesondere eine Stahllitze (15), aufweist, vorzugweise ist.

5. In Längsrichtung (X) endlos geschlossenes Band (1) gemäß Anspruch 1 oder 4, wobei das Schutzelement (15) in Längsrichtung (X) unterbrochen ausgebildet ist.

6. In Längsrichtung (X) endlos geschlossenes Band (1) gemäß einem der Ansprüche 1, 4 oder 5,
wobei eine Mehrzahl von Schutzelementen (15) in Längsrichtung (X) einander abschnittsweise überlappend angeordnet ist.

7. In Längsrichtung (X) endlos geschlossenes Band (1) gemäß einem der vorherigen Ansprüche, ferner mit
einem innenliegenden Bereich (11), und
einem außenliegenden Bereich (12),
wobei der Kernbereich (10) zwischen dem innenliegenden Bereich (11) und dem außenliegenden Bereich (12) angeordnet ist,
wobei vorzugsweise ferner der Randbereich (13; 14) wenigstens abschnittsweise, vorzugsweise vollständig, zwischen dem innenliegenden Bereich (11) und dem außenliegenden Bereich (12) angeordnet ist.

8. In Längsrichtung (X) endlos geschlossenes Band (1) gemäß einem der vorherigen Ansprüche,
wobei das endlos geschlossene Band (1) zwei einander quer zur Längsrichtung (X) gegenüberliegende Randbereiche (13, 14) aufweist.

9. In Längsrichtung (X) endlos geschlossenes Band (1) gemäß einem der vorherigen Ansprüche,
wobei der Kernbereich (10) ein Verstärkungsgewebe (10) aufweist.

10. In Längsrichtung (X) endlos geschlossenes Band (1) gemäß einem der vorherigen Ansprüche,
wobei ein innenliegender Bereich (11) und/oder ein außenliegender Bereich (12) und/oder der Randbereich (13; 14) und/oder beide Randbereiche (13, 14) ein elastomeres Material aufweisen, vorzugsweise aus einem elastomeren Material bestehen.

11. Verfahren zur Herstellung eines in Längsrichtung (X) endlos geschlossenen Bands (1) gemäß einem der vorherigen Ansprüche, mit den Schritten:
Herstellen eines endlos geschlossenen Kernbereichs (10) durch Wickeln, Einarbeiten eines Schutzelements (15) zumindest abschnittsweise in wenigstens einen Randbereich (13; 14), und
Anordnen des Randbereichs (13; 14) seitlich quer zur Längsrichtung (X) neben dem Kernbereich (10).

12. Verfahren gemäß Anspruch 11, ferner mit den Schritten:
Anordnen eines innenliegenden Bereichs (11) von innen an den Kernbereich (10),
wobei der innenliegende Bereich (11) vorzugsweise quer zur Längsrichtung (X) über den Kernbereich (10) hinausragt, und
Anordnen eines außenliegenden Bereichs (12) von außen auf den Kernbereich (10),
wobei der außenliegende Bereich (11) vorzugsweise quer zur Längsrichtung (X) über den Kernbereich (10) hinausragt, so dass der Randbereich (13; 14) zumindest teilweise, vorzugsweise vollständig, zwischen dem innenliegenden Bereich (11) und dem außenliegenden Bereich (12) angeordnet ist.

13. Verfahren gemäß Anspruch 11 oder 12, ferner mit dem zusätzlichen Schritt:
Vulkanisieren des Bandes (1).

14. Verfahren gemäß einem der Ansprüche 11 bis 13, ferner mit dem zusätzlichen Schritt:
Trennen des Randbereichs (13; 14) und/oder eines innenliegenden Bereichs (10) und/oder eines außenliegenden Bereichs (11) in Richtung der Dicke (Z) des Bandes (1), so dass quer zur Längsrichtung (X) der Randbereich (13; 14) mit dem innenliegenden Bereich (10) und/oder mit dem außenliegenden Bereich (11) bündig abschließt und das Schutzelement (15) einschließt.

## Claims

1. Belt (1) that is continuously closed in the longitudinal direction (X), in particular a round baler belt (1), having
a core region (10), and
at least one peripheral region (13; 14) arranged transversely to the longitudinal direction (X), the peripheral region (13; 14) having, at least sectionally, a protective element (15) which is incorporated into the material of the peripheral region (13;14),
**characterized in that**
the core region (10) is continuously wound.

2. Belt (1) that is continuously closed in the longitudinal direction (X) according to Claim 1,
the protective element (15) being arranged around the entire continuously closed circumference in the longitudinal direction (X).

3. Belt (1) that is continuously closed in the longitudinal direction (X) according to Claim 1 or 2,
the protective element (15) stretching more in the longitudinal direction (X) than the core region (10) .

4. Belt (1) that is continuously closed in the longitudinal direction (X) according to one of the preceding claims,
the protective element (15) having, preferably being, a metal element (15), in particular a steel wire (15).

5. Belt (1) that is continuously closed in the longitudinal direction (X) according to Claim 1 or 4,
the protective element (15) being configured in an interrupted manner in the longitudinal direction (X) .

6. Belt (1) that is continuously closed in the longitudinal direction (X) according to one of Claims 1, 4 and 5,
a plurality of protective elements (15) being arranged in a manner overlapping one another sectionally in the longitudinal direction (X).

7. Belt (1) that is continuously closed in the longitudinal direction (X) according to one of the preceding claims, also having
an internal region (11), and
an external region (12),
the core region (10) being arranged between the internal region (11) and the external region (12), the peripheral region (13; 14) furthermore preferably being arranged at least sectionally, preferably entirely, between the internal region (11) and the external region (12).

8. Belt (1) that is continuously closed in the longitudinal direction (X) according to one of the preceding claims,
the continuously closed belt (1) having two peripheral regions (13, 14) located opposite one another transversely to the longitudinal direction (X) .

9. Belt (1) that is continuously closed in the longitudinal direction (X) according to one of the preceding claims,
the core region (10) having a reinforcing fabric (10).

10. Belt (1) that is continuously closed in the longitudinal direction (X) according to one of the preceding claims,
an internal region (11) and/or an external region (12) and/or the peripheral region (13; 14) and/or both peripheral regions (13, 14) exhibiting an elastomeric material, preferably consisting of an elastomeric material.

11. Method for producing a belt (1) that is continuously closed in the longitudinal direction (X) according to one of the preceding claims, having the steps of:
producing a continuously closed core region (10) by winding,
incorporating a protective element (15) at least sectionally into at least one peripheral region (13;14), and
arranging the peripheral region (13; 14) laterally next to the core region (10) transversely to the longitudinal direction (X).

12. Method according to Claim 11, also having the steps of:
arranging an internal region (11) against the core region (10) from the inside, the internal region (11) preferably protruding beyond the core region (10) transversely to the longitudinal direction (X), and
arranging an external region (12) on the core region (10) from the outside, the external region (11) preferably protruding beyond the core region (10) transversely to the longitudinal direction (X), such that the peripheral region (13; 14) is arranged at least partially, preferably entirely, between the internal region (11) and the external region (12).

13. Method according to Claim 11 or 12, also having the additional step of:
vulcanizing the belt (1).

14. Method according to one of Claims 11 to 13, also having the additional step of:
separating the peripheral region (13; 14) and/or an internal region (10) and/or an external region (11) in the direction of the thickness (Z) of the belt (1), such that the peripheral region (13; 14) terminates flush with the internal region (10) and/or with the external region (11) transversely to the longitudinal direction (X) and encloses the protective element (15).

## Revendications

1. Bande fermée sans fin (1) dans la direction longitudinale (X), en particulier bande de presse à balles rondes (1), avec
une région de coeur (10), et
au moins une région de bord (13; 14) disposée transversalement à la direction longitudinale (X),
dans laquelle la région de bord (13; 14) présente au moins en partie un élément de protection (15), qui est intégré dans la matière de la région de bord (13; 14), **caractérisée en ce que** la région de coeur (10) est enroulée sans fin.

2. Bande fermée sans fin (1) dans la direction longitudinale (X) selon la revendication 1, dans laquelle l'élément de protection (15) est disposé dans la direction longitudinale (X) sur toute la périphérie fermée sans fin.

3. Bande fermée sans fin (1) dans la direction longitudinale (X) selon une revendication 1 ou 2, dans laquelle l'élément de protection (15) présente dans la direction longitudinale (X) une extensibilité plus élevée que la région de coeur (10).

4. Bande fermée sans fin (1) dans la direction longitudinale (X) selon l'une quelconque des revendications précédentes, dans laquelle l'élément de protection (15) présente, de préférence est, un élément métallique (15), en particulier un câble d'acier (15).

5. Bande fermée sans fin (1) dans la direction longitudinale (X) selon une revendication 1 ou 4, dans laquelle l'élément de protection (15) est interrompu en direction longitudinale (X).

6. Bande fermée sans fin (1) dans la direction longitudinale (X) selon l'une quelconque des revendications 1, 4 ou 5, dans laquelle une multiplicité d'éléments de protection (15) sont disposés en se chevauchant en partie dans la direction longitudinale (X) .

7. Bande fermée sans fin (1) dans la direction longitudinale (X) selon l'une quelconque des revendications précédentes, avec en outre une région située à l'intérieur (11), et
une région située à l'extérieur (12),
dans laquelle la région de coeur (10) est disposée entre la région située à l'intérieur (11) et la région située à l'extérieur (12),
dans laquelle en outre la région de bord (13; 14) est de préférence disposée au moins en partie, de préférence entièrement, entre la région située à l'intérieur (11) et la région située à l'extérieur (12).

8. Bande fermée sans fin (1) dans la direction longitudinale (X) selon l'une quelconque des revendications précédentes, dans laquelle la bande fermée sans fin (1) présente deux régions de bord (13, 14) disposées l'une en face de l'autre transversalement à la direction longitudinale (X).

9. Bande fermée sans fin (1) dans la direction longitudinale (X) selon l'une quelconque des revendications précédentes, dans laquelle la région de coeur (10) présente un tissu de renforcement (10).

10. Bande fermée sans fin (1) dans la direction longitudinale (X) selon l'une quelconque des revendications précédentes, dans laquelle une région située à l'intérieur (11) et/ou une région située à l'extérieur (12) et/ou la région de bord (13; 14) et/ou les deux régions de bord (13, 14) présentent un matériau élastomère, de préférence sont constituées d'un matériau élastomère.

11. Procédé de fabrication d'une bande fermée sans fin (1) dans la direction longitudinale (X) selon l'une quelconque des revendications précédentes, comprenant les étapes suivantes:
fabriquer une région de coeur fermée sans fin (10) par enroulement,
intégrer un élément de protection (15) au moins en partie dans au moins une région de bord (13; 14), et
disposer la région de bord (13; 14) à côté de la région de coeur (10) latéralement transversalement à la direction longitudinale (X).

12. Procédé selon la revendication 11, avec en plus les étapes suivantes:
disposer une région située à l'intérieur (11) par l'intérieur sur la région de coeur (10), dans lequel la région située à l'intérieur (11) dépasse au-delà de la région de coeur (10) de préférence transversalement à la direction longitudinale (X), et
disposer une région située à l'extérieur (12) par l'extérieur sur la région de coeur (10), dans lequel la région située à l'extérieur (11) dépasse au-delà de la région de coeur (10) de préférence transversalement à la direction longitudinale (X),
de telle manière que la région de bord (13; 14) soit disposée au moins en partie, de préférence entièrement, entre la région située à l'intérieur (11) et la région située à l'extérieur (12).

13. Procédé selon une revendication 11 ou 12, comprenant en outre l'étape supplémentaire: vulcaniser la bande (1).

14. Procédé selon l'une quelconque des revendications 11 à 13, comprenant en outre l'étape supplémentaire: trancher la région de bord (13; 14) et/ou une région située à l'intérieur (10) et/ou une région située à l'extérieur (11) dans la direction de l'épaisseur (Z) de la bande (1), de telle manière que la région de bord (13; 14) se termine à fleur de la région située à l'intérieur (10) et/ou de la région située à l'extérieur (11) transversalement à la direction longitudinale (X) et entoure l'élément de protection (15).
